# EUROPEAN PATENT SPECIFICATION

(11) **EP 0 478 859 B1**
(45) Date of publication and mention of the grant of the patent: **15.02.1995**
(21) Application number: 90313944.2
(22) Date of filing: 19.12.1990
(51) Int. Cl.: A23F 5/02

(54) **Process for improving the qualities of coffee beans**
Verfahren zur Qualitätsverbesserung von Kaffeebohnen
Procédé pour améliorer la qualité de grains de café

(30) Priority: 05.10.1990 JP 268069/90
(43) Date of publication of application: 08.04.1992
(73) Proprietor: Asama Chemical Co., Ltd., Tokyo (JP); Izumitani, Maremitsu, Kokubunji-shi, Tokyo (JP); MAMIE CORPORATION, Tokyo (JP)
(72) Inventor: Izumitani, Maremitsu, Kokubunji-shi, Tokyo (JP); Yajima, Mizuo, Koto-ku, Tokyo (JP)
(74) Representative: Taylor, Phillip Kenneth

(56) References cited:
- FR-A- 908 523
- FR-A- 1 045 422
- GB-A- 354 771

## Description

This invention relates to a process for improving the qualities of coffee beans and coffee beans of improved qualities.

It is generally believed that the aroma of coffee depends on the qualities of green coffee beans, the roasting step and the subsequent grinding and extraction steps respectively at proportions of 70 %, 20 % and 10 %. Coffee beans mainly used at present may be broadly classified into Coffea arabica including Brazil, Colombia and Guatemala and C. robusta including Java robusta. Although C. robusta is advantageous in the low cost, it is dealt with as a low-grade product having a flat flavor, lacking in taste, and having a muddy odor. Therefore it has been exclusively used as a filler in blending and as a material for the production of instant coffee and canned coffee.

However a recent tendency towards the luxuriousness in eating has elevated the level of consumers' requirements for the tastes of food. Thus it has been required to improve the taste of coffee as a favourite, in particular, instant and canned coffees. As described above, however, instant coffee products are frequently produced by using C. robusta coffee beans inferior in the qualities per se to C. arabica, which limits the improvement of the taste of the instant coffee products.

French Patent No. 1,045,222 is concerned with neutralizing caffeine, pyridine bases, furfurol derivatives, terpeines, aldehydes etc contained (or developed during roasting) in divers alementary product and plants or stimulants rich in alkaloids such as coffee, tea, mate, cocoa, etc. The addition of the tannins in the form of their ordinary pulverulent state, purified or isolated as well as liquid, dry or powder extracts to the products in question may be carried in their green state or during or after roasting.

French Patent No. 908 523 describes the treatment of coffee after it has been roasted by spraying or intimately mixing the roasted coffee with a solution of tannin.

UK Patent No. 354771 describes inter alia the spraying of roasted coffee beans with a solution of tannic acids containing lipoids to render ineffective those constituents, especially the alkaloids, which normally have a harmful effect on the human body.

In the meanwhile, the present inventors have conducted a series of studies on tannin and previously found out that tannin could relieve the characteristic bitterness of a food and that the taste of, for example, a coffee drink could be improved by adding tannin thereto. Thus they have applied for a patent on this finding (European Patent Application No. 416718).

As the results of the subsequent studies, they have further found out that the qualities of coffee beans can be remarkably improved by treating green coffee beans with tannin, thus completing the present invention.

Accordingly, the present invention relates to a process for improving the qualities of coffee beans which comprises spraying the surfaces of green coffee beans with tannin(s) solution characterised in that it comprises spraying the surfaces of green coffee beans with a tannin(s) solution to provide 0.01 to 3% by weight, based on the total amount of the green coffee beans,of tannin allowing the sprayed beans to stand at room temperature for from 0.5 to 2.0 hours and thereafter roasting the coffee beans.

The coffee beans to be used in the present invention are not particularly specified and thus the present invention can be applied to every type of coffee beans. However, the present invention can drastically improve the qualities of C. robusta coffee beans, which are generally regarded as a low-grade product, as described above. As a matter of course, the present invention is effective on C. arabica coffee beans, which are regarded as high- or moderate-grade coffees, and can further improve the qualities thereof.

The expression "improving the qualities" as used herein means elevating the qualities of coffee beans and thus improving the flavor of the final product, namely, a coffee drink. More particularly, it means to reduce the unpleasant astringency and offensive odor characteristic of coffee without deteriorating the inherent excellent taste, aroma and bitterness, to thereby improve the body of the coffee. Although coffee generally gives rise to suspension 30 minutes to 1 hour after the extraction, to cause changes in the taste of the coffee and the loss of the aroma thereof, thus deteriorating the commercial value, coffee beans treated in accordance with the present invention sustains its flavor for a prolonged period of time.

In the present invention, it is essential to spray the surfaces of green coffee beans, namely, unroasted beans, with tannin(s) solution. The effect of the present invention can never be achieved when roasted coffee beans are treated with tannin.

The tannin is used in an amount of from 0.01 to 3 % by weight based on the total amount of the green coffee beans. When this amount is smaller than 0.01 % by weight, scarcely any effect can be achieved. When it exceeds 3 % by weight, on the other hand, the bitterness of the tannin might deteriorate the flavor of coffee. It is thus preferable to use tannin in an amount of from 0.05 to 1.5 % by weight.

The spraying method enables a large amount of green coffee beans to be conveniently and uniformly treated thereby .

After the completion of the surface-treatment with tannin, the green coffee beans are roasted. Here it is desirable to leave the surface-treated green coffee beans to stand at room temperature for 0.5 to 2 hours prior to the roasting, since the effect of improving the qualities of the coffee beans can be further enhanced thereby.

The roasting may be performed in a conventional manner, namely by heating the coffee beans at approximately 195 °C for 10 to 20 minutes.

In the present invention, tannin means an astringent substance commonly contained in, for example, root, stem, leaf, cortex and fruit of plants.

Typical examples of the tannin include persimmon tannin, chinese nutgall tannin, nutgall tannin, tea-leaf tannin, wattle tannin, quebracho tannin, dividivi tannin, myrobalan tannin and sumac tannin. Now each tannin will be briefly described.

### Persimmon tannin:

Tannin contained in green astringent persimmons. A persimmon tannin extract is obtained by grinding green astringent persimmons, hermetically sealing the ground matter together with water and filtering it after several days. The obtained supernatant or a solution obtained by adding water to the cake followed by pressing affords a tannin extract. In general, the extract is stored in a hermetically sealed state for approximately 6 months prior to the use. A persimmon tannin powder is obtained by powdering the aforesaid persimmon tannin extract by, for example, spray drying, vacuum drying or lyophilizing.

### Chinese nutgall tannin:

Tannin contained in a gall formed on a leaf of Rhus javanica (Anacardiaceae) by the sting of Kaburagia rhusiocola TAKAGI. A dry gall contains 50 to 70 % by weight of chinese nutgall tannin. It is available as a material for the formulation of, for example, astringent, remedy for hematemesis or remedy for catarrh.

### Nutgall tannin:

Tannin contained in a gall formed on a young branch of a fagaceous tree by the stimulation caused by the oviposition of Cynips gallaetinctoria OLIV. A dry gall contains approximately 70 % by weight of nutgall tannin. It is one of crude drugs and available for nearly the same purposes as those described in the case of chinese nutgall tannin.

### Tea-leaf tannin:

Tannin contained in a large amount in tea leaves. Dried fresh tea leaves contains 15 to 25 % by weight of tea-leaf tannin, though the content varies depending on the species of tea and the harvest time.

### Wattle tannin:

Tannin contained in the cortex of various plants belonging to the genus Acacia. A dry cortex contains approximately 30 % by weight of wattle tannin.

### Quebracho tannin:

Tannin extracted from the duramen of quebracho belonging to the family Rhus. A duramen contains approximately 20 % by weight of quebracho tannin.

### Dividivi tannin:

Tannin contained in dividivi which is a leguminous tall tree. A dry dividivi fruit contains approximately 50 % by weight of dividivi tannin.

### Myrobalan tannin:

Tannin contained in the fruit of a plant belonging to the family Combretaceae. A dry myrobalan fruit contains approximately 20 to 40 % by weight of myrobalan tannin while the sarcocarp contains 40 to 50 % by weight of the same.

### Sumac tannin:

Tannin contained in the leaf of sumac or other plants belonging to the family of Rhus. Dry fresh leaves contains 13 to 26 % by weight of sumac tannin.

Each of these tannins may be obtained in the form of a tannin extract by extracting with water. Further, the obtained tannin extract may be powdered by, for example, spray drying, vacuum drying or lyophilizing to thereby give a tannin powder.

The tannins as cited above are merely given by way of example and it is needless to say that the present invention is not restricted thereby.

The detailed mechanism of a remarkable improvement of the qualities of coffee beans achieved by treating green coffee beans with tannin followed by roasting, as observed in the present invention, is unelucidated as yet. It is assumed, however, that tannin would form an insoluble compound together with proteins such as globulin contained in the green coffee beans, which would modify the green coffee beans (i.e., removing components causing offensive odors and fermented matters) in combination with the subsequent heating (roasting) step.

As has been described above in detail, the present invention makes it possible to remarkably improve the qualities of green coffee beans by a relatively easy procedure. In particular, the qualities of C. robusta coffee beans, which have been regarded as a low-grade product, can be significantly improved thereby. Thus it is expected that the flavor of the products from C. robusta coffee beans, such as instant coffee or canned coffee, can be improved thereby.

### [Examples]

To further illustrate the present invention, and not by way of limitation, the following Examples will be given, wherein all parts are by weight.

### Examples 1 and 2, and Comparative Examples 1 to 3

100 parts of green C. robusta (AP-1) coffee beans was sprayed with a tannin solution in an amount as specified in Table 1. After being left to stand at room temperature for 1 hour, the coffee beans were roasted at 197 °C for 15 minutes. Next, they were ground with a coffee mill and extracted with hot water in a coffee drip to thereby give a coffee. In Comparative Example 1, no tannin solution was added, while the amount of the tannin used in each of Comparative Examples 2 and 3 was outside the scope of the present invention.

Ten panelists took each coffee thus obtained and evaluated the flavor thereof (aroma, bitterness, astringency and mildness) in 10 grades (tannin-free C. robusta: 3, tannin-free Colombia which will be described hereinafter: 5, the full mark: 10).

Table 1 summarizes the results of the evaluation and typical remarks.

**Table 1**

| | Tannin (part) | Evaluation | |
|---|---|---|---|
| | | Score | Typical remark |
| Comp. Ex. 1 | - | 3 | poor in taste and aroma, bitter. |
| Comp. Ex. 2 | 0.005 | 4 | nearly the same as Comp. Ex. 1. |
| Ex. 1 | 0.3 | 9 | good color, no offensive odor. similar to C. arabica. |
| Ex. 2 | 1.5 | 9 | better body than Ex. 1, high preservable. |
| Comp. Ex. 3 | 5.0 | 2 | highly astringent, unsuitable for drinking. |

### Examples 3 and 4 and Comparative Examples 4 to 6

The procedures of Examples 1 and 2 and Comparative Examples 1 to 3 were repeated except that green C. arabica (Colombia) coffee beans were used. Table 2 gives the results.

**Table 2**

| | Tannin (part) | Evaluation | |
|---|---|---|---|
| | | Score | Typical remark |
| Comp. Ex. 4 | - | 5 | light taste and aroma of regular coffee. |
| Comp. Ex. 5 | 0.005 | 6 | nearly the same as Comp. Ex. 4. |
| Ex. 3 | 0.3 | 9 | highly transparent and good color, excellent in body and aroma. |
| Ex. 4 | 1.5 | 10 | hard flavor with excellent body and variable taste |
| Comp. Ex. 3 | 5.0 | 4 | highly astringent, unsuitable for drinking. |

## Claims

1. A process for improving the qualities of coffee beans by treating green coffee beans with a solution of tannin(s) characterised in that it comprises spraying the surfaces of green coffee beans with a tannin(s) solution to provide 0.01 to 3% by weight, based on the total weight of the green coffee beans, of tannin(s) allowing the sprayed beans to stand at room temperature for 0.5 to 2.0 hours and thereafter roasting the coffee beans thus treated.

2. A process as claimed in claim 1 characterised in that the green coffee beans are sprayed with tannin(s) solution to provide from 0.05 to 1.5% by weight based on the total weight of the green coffee beans of tannins.

## Patentansprüche

1. Verfahren zur Verbesserung der Eigenschaften von Kaffeebohnen durch Behandeln grüner Kaffeebohnen mit einer Tannin(en)lösung, dadurch gekennzeichnet, daß es das Besprühen der Oberfläche grüner Kaffeebohnen mit einer Tannin(en)lösung, um ein einem gewichtsmäßigen Anteil von 0,01 bis 3 % des Gesamtgewichts der grünen Kaffeebohnen entsprechendes Tannin(en)gewicht zu erhalten, das Ruhenlassen der grünen Kaffeebohnen für 0,5 bis 2,0 Stunden bei Raumtemperatur und das anschließende Rösten der so behandelten Kaffeebohnen umfaßt.

2. Verfahren nach Anspruch 1, dadurch gekennzeichnet, daß die grünen Kaffeebohnen mit Tannin(en)lösung besprüht werden, um ein einem gewichtsmäßigen Anteil von 0,05 bis 1,5 % des Gesamtgewichts der grünen Kaffeebohnen entsprechendes Tannin(en)gewicht zu erhalten.

## Revendications

1. Procédé pour améliorer la qualité de grains de café en traitant des grains de café verts avec une solution de tanin(s) caractérisé en ce qu'il comprend la pulvérisation d'une solution de tanin(s) sur les surfaces de grains de café verts pour donner de 0,01 à 3% en poids, basé sur le poids total des grains de café verts, de tanin(s) permettant aux grains sur lesquels a été effectuée la pulvérisation de rester à température ambiante pendant 0,5 à 2,0 heures et ensuite la torréfaction des grains de café ainsi traités.

2. Procédé selon la revendication 1, caractérisé en ce qu'une solution de tanin(s) est pulvérisée sur les grains de café verts pour donner de 0,05 à 1,5 % en poids basé sur le poids total des grains de café verts de tanins.
